# EUROPÄISCHE PATENTANMELDUNG

(11) **EP 1 961 935 A2**
(43) Veröffentlichungstag der Anmeldung: **27.08.2008**
(21) Anmeldenummer: 08001483.0
(22) Anmeldetag: 26.01.2008
(51) Int. Cl.: F02B 27/02

(54) **Schaltbare Resonanz-Sauganlage für eine Brennkraftmaschine**

(30) Priorität: 23.02.2007 DE 102007010309
(71) Anmelder: Dr. Ing. h.c. F. Porsche Aktiengesellschaft, 70435 Stuttgart (DE)
(72) Erfinder: Semmler, Daniel, 70563 Stuttgart (DE); Zücker, Wolfgang, 71229 Leonberg (DE); Talan, Goerg, 73660 Urbach (DE)

(57) **Zusammenfassung**

Die Erfindung betrifft eine schaltbare Resonanz-Sauganlage (1) für eine Brennkraftmaschine mit einer ersten und einer zweiten Zylinderbank, wobei den Zylinderbänken jeweils ein Resonanzbehälter (2 bzw. 3) mit einer zu den Zylindern führenden Gruppen von Schwingrohren zugeordnet ist, sowie die Resonanzbehälter über mit Schaltklappen (9, 10) versehene Resonanzrohre (7, 8) miteinander verbunden sind.

Bei einer solchen Sauganlage ist erfindungsgemäß vorgesehen, dass die jeweils der einen Zylinderbank zugeordneten Schwingrohre (11) mit dem Resonanzbehälter (2), der der anderen Zylinderbank benachbart ist, verbunden sind.

Diese Sauganlage ist zur Verwendung bei einer Brennkraftmaschine mit Zylinderbänken in V-Anordnung vorgesehen.

## Beschreibung

Die Erfindung betrifft eine schaltbare Resonanz-Sauganlage, nachfolgend kurz Sauganlage genannt, für eine Brennkraftmaschine, mit einer ersten und einer zweiten Zylinderbank, wobei den Zylinderbänken jeweils ein Resonanzbehälter mit einer zu den Zylindern führenden Gruppe von Schwingrohren zugeordnet ist, sowie die Resonanzbehälter über mit Schaltklappen versehene Resonanzrohre miteinander verbunden sind.

Sauganlagen mit Resonanz-Aufladung zur optimalen Füllung der Zylinder bei unterschiedlichen Drehzahlen bzw. Lastbereichen sind aus dem Stand der Technik bekannt. So ist in der DE 103 21 323 B3 eine Sauganlage der eingangs genannten Art dargestellt und beschrieben, die für einen 6-Zylinder-Boxermotor ausgebildet ist. Diese Sauganlage ist auf Grund des Umstandes, dass sie für einen Boxermotor vorgesehen ist, symmetrisch ausgebildet. Zwischen den beiden mit den Schwingrohren verbundenen Resonanzbehältern sind zwei Resonanzrohre vorgesehen, wobei jedes Resonanzrohr eine zentrale Schaltklappe aufweist. Die Luftzufuhr zur Sauganlage erfolgt derart, dass eine Luftzufuhrleitung zwei zu einem dieser Resonanzrohre führende Einzelrohre aufweist, die stromaufwärts in einen gemeinsamen Einzelrohrabschnitt übergehen, in dem eine Drosselklappe angeordnet ist. Dieses Konzept der Sauganlage hat sich bei einem Boxermotor bewährt und ermöglicht auf Grund der boxermotorspezifischen Anordnung der Zylinder eine kompakte Gestaltung der Sauganlage. Die schaltbaren Resonanzrohre sind zwischen den beiden Resonanzkammern angeordnet.

Eine ähnliche Sauganlage ist aus der DE 198 42 724 A1 bekannt. Bei dieser ist jedem zu dem Resonanzrohr führenden Einzelrohr eine Drosselklappe zugeordnet.

Eine schaltbare Resonanz-Sauganlage für eine Brennkraftmaschine mit zwei Zylinderbänken in V-Anordnung ist aus der DE 39 40 486 A1 bekannt. Bei dieser stehen sich zwei gekrümmte Gruppen von Schwingrohren einander gegenüber. Innerhalb der Krümmung sind Resonanzkammern angeordnet, in die ringförmige und längenverstellbare Resonanzkanäle münden. Hierzu sind die Resonanzkanäle innenseits mit einem Drehschieber versehen; durch die Drehung wird eine im Drehschieber versehene Öffnung verschoben und damit die Länge der Resonanzkanäle stufenlos verändert. Alle Resonanzkanäle sind gleichsinnig ausgerichtet. Die jeweils der einen Zylinderbank zugeordneten Schwingrohre sind mit derjenigen Resonanzkammer, die dieser Zylinderbank benachbart ist, verbunden. Die Resonanzkammern befinden sich zwischen den Resonanzrohren und den Schwingrohren. Die beiden Resonanzkammern sind miteinander durch einen Kanal verbunden, in dem eine Schaltklappe angeordnet ist. Bezogen auf die Längsorientierung der Brennkraftmaschine und damit der Sauganlage, sind die Schwingrohre einerseits um die Resonanzkanäle, andererseits parallel zueinander und in Ebenen senkrecht zur Längsachse der Brennkraftmaschine angeordnet. - Bei dieser Sauganlage ergibt sich durch die ringförmige Anordnung der Resonanzrohre ein Aufbau mit großer Bauhöhe.

Die EP 1 105 631 B1 zeigt eine Sauganlage mit Schwingrohr- und Resonanzsystem, bei der Resonanz- und Schwingrohre wechselweise nebeneinander, jeweils ringförmig um einen zentralen Innenraum herum angeordnet sind. Der Innenraum nimmt einen aus mehreren Kammern bestehenden Drehschieber auf, mit dem die Länge der Rohre stufenlos veränderbar ist. Im Drehschieber sind zwei Resonanzkammern gebildet, die durch eine Klappe gekoppelt werden können. Die Resonanzrohre sind nicht nur in ihrer Länge, sondern in ihrem Querschnitt dadurch veränderbar, dass eines der Resonanzrohre abschaltbar ist.

Die DE 40 32 380 C2 offenbart eine Ansauganlage für eine Brennkraftmaschine der Reihenbauart, wobei die Ansauganlage zwei Resonanzkammern aufweist, mit denen jeweils Resonanzrohre unterschiedlicher Länge oder unterschiedlichen Querschnitts verbunden sind. Diese Resonanzrohre sind gruppenweise und gleichsinnig für beide Resonanzkammern schaltbar. Die Resonanzkammern sind durch eine Klappe miteinander verbindbar. Die Luftzuführung erfolgt über die Resonanzrohre zu den Resonanzkammern und von dort zu den Schwingrohren.

Aufgabe der vorliegenden Erfindung ist es, eine schaltbare Resonanz-Sauganlage der eingangs genannten Art so weiterzubilden, dass sie für eine Brennkraftmaschine mit Zylinderbänken in V-Anordnung geeignet ist, wobei die Sauganlage eine kompakte Gestaltung aufweist.

Gelöst wird die Aufgabe bei einer Sauganlage der eingangs genannten Art dadurch, dass die jeweils der einen Zylinderbank zugeordneten Schwingrohre mit dem Resonanzbehälter, der der anderen Zylinderbank benachbart ist, verbunden sind.

Auf Grund der erfindungsgemäßen Gestaltung der Sauganlage sind demnach die mit der einen, ersten Zylinderbank verbundenen Schwingrohre mit dem Resonanzbehälter verbunden, der benachbart der anderen zweiten Zylinderbank angeordnet ist und es sind die mit der zweiten Zylinderbank verbundenen Schwingrohre mit dem Resonanzbehälter verbunden, der der ersten Zylinderbank benachbart ist. Diese grundlegende Gestaltung der Sauganlage ermöglicht die unterschiedlichsten Modifizierungen, wobei bei allen, auf Grund der genannten Zuordnung von Schwingrohren und Resonanzbehältern, eine kompakte Gestaltung der Sauganlage erzielt werden kann.

So ist gemäß einer bevorzugten Ausführungsform der Erfindung vorgesehen, dass die Schwingrohre und/oder die Resonanzrohre innerhalb der Resonanzbehälter angeordnet sind. Es ergibt sich somit eine verschachtelte Anordnung der die Führung der Ansaugluft in der Sauganlage bewirkenden Bauteile. Die Volumina der Resonanzbehälter umgeben die Schwingrohre und/oder die Resonanzrohre.

Es ist insbesondere vorgesehen, dass die der jeweiligen Zylinderbank zugeordneten Schwingrohre denjenigen Resonanzbehälter durchsetzen, der dieser Zylinderbank benachbart ist.

Baulich besonders kompakt lässt sich die Sauganlage verwirklichen, wenn die Schwingrohre der Sauganlage, ausgehend von den Zylinderbänken, in Richtung der Oberseite der Sauganlage gekrümmt sind und/oder die Resonanzrohre, ausgehend von den Zylinderbänken, in Richtung Unterseite der Sauganlage gekrümmt sind. Insbesondere ist vorgesehen, dass die Gruppe von Saugrohren der Sauganlage in eine Richtung gekrümmt ist und die Gruppe von Resonanzrohren der Sauganlage gegensinnig gekrümmt ist, insbesondere die beiden Gruppen ineinander geschachtelt angeordnet sind. Die Resonanzrohre sind vorzugsweise U-förmig gekrümmt ausgebildet.

Unter Berücksichtigung des erfindungsgemäßen Grundprinzips wird es als besonders vorteilhaft angesehen, die Schwing- und Resonanzrohre schräg zu einer Ebene anzuordnen, die quer zur Längsachse der Brennkraftmaschine, somit quer zur Kurbelwellenachse der Brennkraftmaschine verläuft. Vorzugsweise sind die Schwingrohre parallel zueinander und die Resonanzrohre parallel zueinander angeordnet, wobei die Ausrichtung der Schwingrohre und der Resonanzrohre voneinander abweicht.

Die den Resonanzrohren zugeordneten Schaltklappen sind in den end- oder den zentralen Bereichen der Resonanzrohre angeordnet. Sind sie in den Endbereichen angeordnet, ergibt sich eine optimierte Aufladung, allerdings bei einem höheren Bauaufwand für den Fall, bei dem jedem Resonanzrohr eine zentrale Schaltklappe zugeordnet ist. Im Fall der Anordnung der Schaltklappen in den Endbereichen der Resonanzrohre weist jedes Resonanzrohr zwei Schaltklappen auf, bei Anordnung in den zentralen Bereichen ist pro Resonanzrohr eine Schaltklappe vorhanden.

Vorzugsweise ist durch die Resonanzrohre eine erste und eine zweite Resonanzstufe gebildet, die unabhängig voneinander schaltbar sind, wobei ein erstes schaltbares Resonanzrohr die erste Resonanzstufe und zwei zweite schaltbare Resonanzrohre die zweite Resonanzstufe bilden.

Gemäß einer besonderen Ausführungsform der Erfindung ist vorgesehen, dass die Luftzuführung der Sauganlage zwei Zuführleitungen aufweist, die unmittelbar mit dem Resonanzbehälter verbunden sind. Die Luftzuführung erfolgt somit nicht zu einem der Resonanzrohre, sondern direkt zu den beiden Resonanzbehältern. Hierdurch ergeben sich besonders gute Aufladeergebnisse.

Die Luftzuführung weist vorzugsweise mindestens eine Drosselklappe auf, wobei die beiden Luftzuführleitungen zwischen der Drosselklappe und den beiden Resonanzbehältern angeordnet sind. Es ist durchaus denkbar, jeder Luftzuführleitung eine eigene Drosselklappe zuzuordnen, die dann synchron öffnen. Die Länge der jeweiligen Zuführleitung entspricht vorzugsweise mindestens der halben Länge eines Resonanzrohrs.

Unter Berücksichtigung des erfindungsgemäßen Konzepts lässt sich eine besonders kompakte Sauganlage durch eine ineinander verschachtelte Anordnung der einzelnen Funktionskomponenten der Sauganlage erzielen. Konstruktiv wird dies insbesondere durch eine mehrteilige Gestaltung der Gehäusekomponenten der Sauganlage bewerkstelligt. So ist vorgesehen, dass die Sauganlage eine Unterschale, einen in diese einlegbaren Einleger, eine Mittelschale und eine Oberschale aufweist. In der Unterschale sind insbesondere die Schaltklappen gelagert und es weist die Unterschale den Flanschanschluss zum Zylinderkopf auf und bildet eine Teilgeometrie der Resonanzrohre und der Schwingrohre ab. Der Einleger bildet insbesondere eine Teilgeometrie der Resonanzrohre ab. Die Mittelschale weist insbesondere einen Flansch für den Anschluss der Drosselklappen, untere Einströmtulpen für die Schwingrohre und eine Trennwand zwischen den beiden Resonanzbehälter auf, ferner bildet die Mittelschale Teilgeometrien der Resonanzrohre und der Schwingrohre ab. Die Oberschale weist insbesondere Einströmtulpen für die Schwingrohre und die Resonanzrohre auf und bildet Teilgeometrien der Resonanzrohre und der Schwingrohre ab.

Weitere Merkmale der Erfindung ergeben sich aus den Unteransprüchen, der Beschreibung der Zeichnung und der Zeichnung selbst, ohne hierauf beschränkt zu sein.

In der Zeichnung ist ein bevorzugtes Ausführungsbeispiel der Erfindung veranschaulicht, ohne hierauf beschränkt zu sein. Es stellt dar:
- Fig. 1: eine schematische Funktionsdarstellung der erfindungsgemäßen schaltbaren Resonanz-Sauganlage,
- Fig. 2: eine räumliche Darstellung der erfindungsgemäßen Sauganlage, schräg von oben gesehen,
- Fig. 3: eine räumliche Ansicht der in Fig. 1 gezeigten Sauganlage, schräg von unten gesehen,
- Fig. 4 bis 7: in einer räumlichen Ansicht die Bildung der Sauganlage aus den einzelnen Bauteilen,
- Fig. 8: einen Querschnitt durch die Sauganlage, im Bereich eines Saugstutzens geschnitten,
- Fig. 9 bis 12: schematische Darstellungen der Sauganlage zur Veranschaulichung des Funktionsprinzips der Sauganlage.

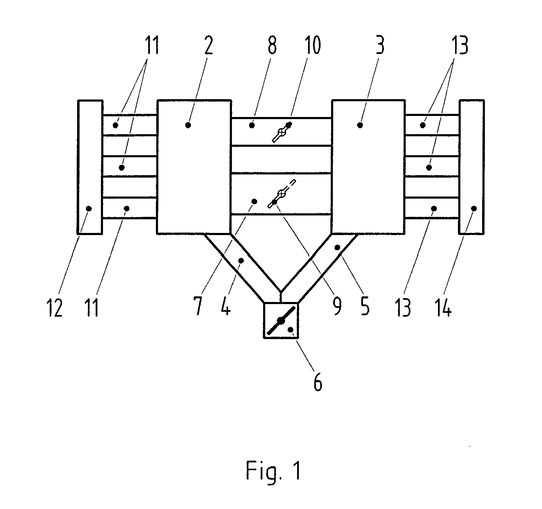

Die Funktionsdarstellung nach Fig. 1 veranschaulicht die schaltbare Resonanz-Sauganlage 1 für eine als V6-Motor ausgebildete Brennkraftmaschine mit einem Resonanzbehälter 2 und einem Resonanzbehälter 3. Die Luftzuführung der Sauganlage 1 weist zwei Zuführleitungen 4 und 5 auf, die unmittelbar mit den Resonanzbehältern 2 und 3 verbunden sind. Eine Drosselklappe 6 regelt die den Zuführleitungen 4 und 5 zuzuführende Luftmenge. Statt der gezeigten einen Drosselklappe 6 können zwei synchron öffnende Drosselklappen vorgesehen sein, wobei jede Drosselklappe mit einer Zuführleitung 4 bzw. 5 zusammenwirkt.

Die beiden Resonanzbehälter 2 und 3 verbinden zwei Resonanzrohre 7 und 8. Das Resonanzrohr 7 weist eine zentrale Schaltklappe 9, das Resonanzrohr 8 eine zentrale Schaltklappe 10 auf.

Dem Resonanzbehälter 2 ist eine Gruppe von drei Schwingrohren 11 zugeordnet, die mit einer Zylinderbank 12 der Brennkraftmaschine verbunden sind. Dem Resonanzbehälter 3 ist eine Gruppe von Schwingrohren 13 zugeordnet, die mit der anderen Zylinderbank 14 der Brennkraftmaschine verbunden sind. Die Besonderheit bei der erfindungsgemäßen Sauganlage besteht darin, und in diesem Sinne ist die Funktionsdarstellung unter dem Aspekt der konstruktiven Ausführung der Sauganlage zu interpretieren, dass der links angeordnete Resonanzbehälter 2 über die Schwingrohre 11 an die bei der konstruktiven Ausführung rechts befindliche Zylinderbank 12 angebunden ist und der rechts angeordnete Resonanzbehälter 3 über die Schwingrohre 13 an die bei der konstruktiven Ausführung links angeordnete Zylinderbank 14 angebunden ist.

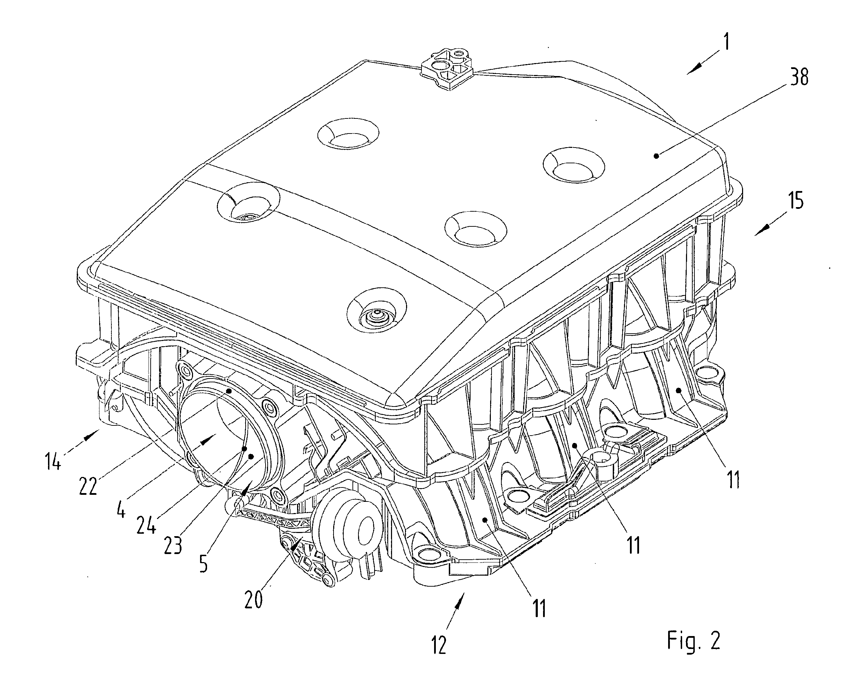

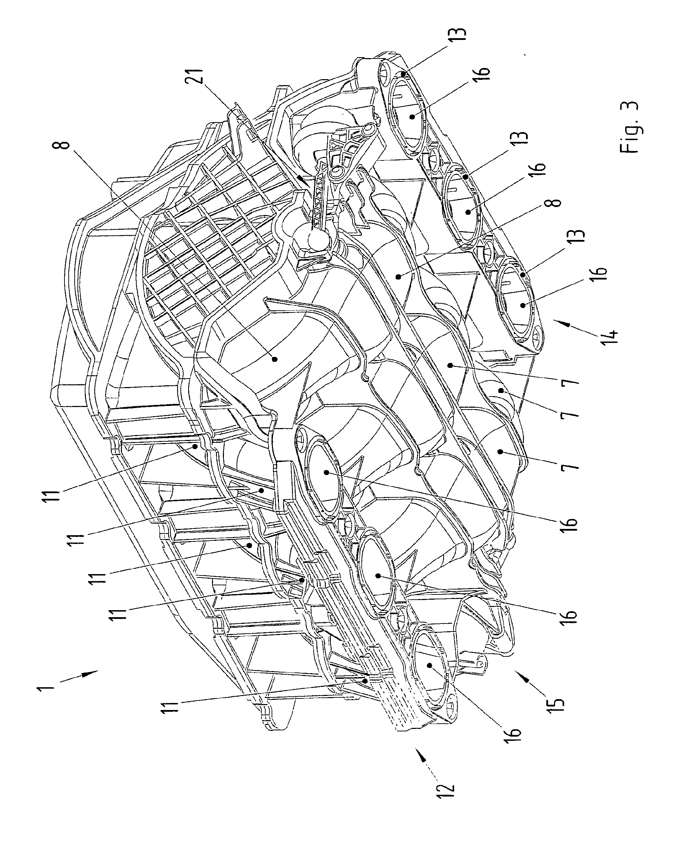

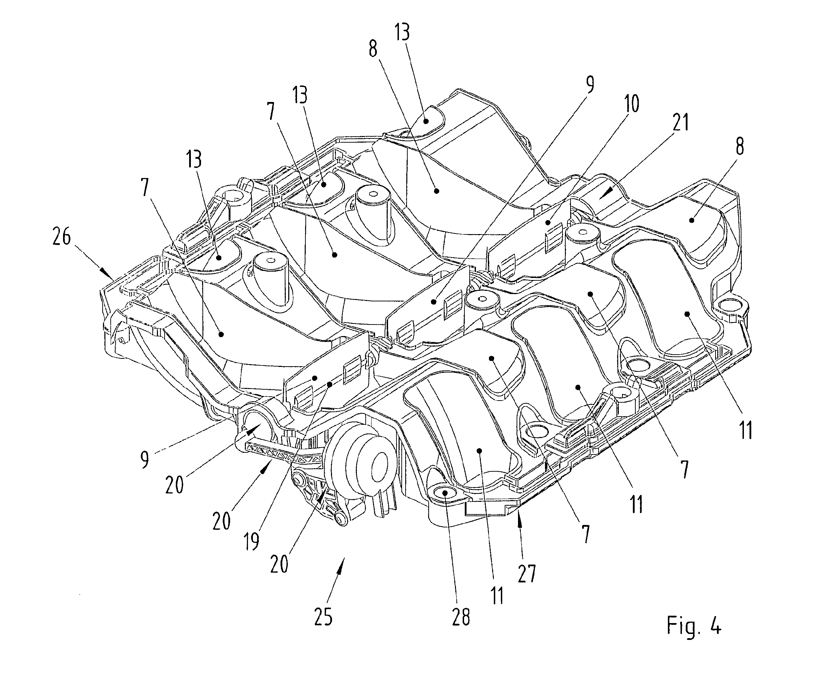

Die Fig. 2 und 3 veranschaulichen die nach dem Funktionsprinzip gemäß Fig. 1 arbeitende Sauganlage 1 in ihrer baulichen Ausgestaltung und zwar in räumlichen Ansichten, schräg von unten bzw. schräg von oben gezeigt. Zu erkennen ist der mehrteilige Aufbau der Sauganlage 1, insbesondere der mehrteilige Aufbau des Gehäuses 15 der Sauganlage 1. Dieser mehrteilige Aufbau ergibt sich anschaulich aus der Darstellung der Fig. 4 bis 7.

Nachfolgend werden zur Verdeutlichung des Aufbaus der Sauganlage 1 die Fig. 1 bis 7 beschrieben:

Die Sauganlage 1 findet Verwendung bei einem V6-Motor. Gezeigt sind im Bereich der Unterseite des Gehäuses 15 die Austrittsöffnungen 16 der sechs Schwingrohre 11, 13, wobei jeweils drei Schwingrohre 11 eine erste Gruppe und drei Schwingrohre 13 eine zweite Gruppe bilden. Mit der Bezugsziffer 12 ist die Zylinderbank, der die Schwingrohre 11 zugeordnet sind, mit der Bezugsziffer 14 diejenige Zylinderbank, der die Schwingrohre 13 zugeordnet sind, veranschaulicht. Auf der Unterseite des Gehäuses 15 sind drei Resonanzrohre gebildet. Das eine Resonanzrohr ist im Sinne der Prinzipskizze gemäß Fig. 1 mit der Bezugsziffer 8, die beiden anderen Resonanzrohre im Sinne der Fig. 1 mit der Bezugsziffer 7 bezeichnet. Im Bereich der senkrechten Mittelachse der Sauganlage, die durch die Achse der Kurbelwelle der Brennkraftmaschine geht, sind die zentralen Schaltklappen 9 bzw. 10 den Resonanzrohren 7 bzw. dem Resonanzrohr 8 zugeordnet. Die Schaltklappen 9 und 10 sind um die Achse 19 schwenkbar, wobei die gemeinsame Verstellung der Schaltklappen 9 mittels eines Stellantriebes 20 und die Verstellung der Schaltklappe 10 mittels eines Stellantriebs 21 erfolgt. In der in Fig. 4 gezeigten Stellung verschließen die Schaltklappen 9 bzw. 10 die Resonanzrohre 7 bzw. das Resonanzrohr 8. In einer vorzugsweise um 90° gedrehten Stellung geben sie den Durchgang der Resonanzrohre 7 bzw. 8 frei.

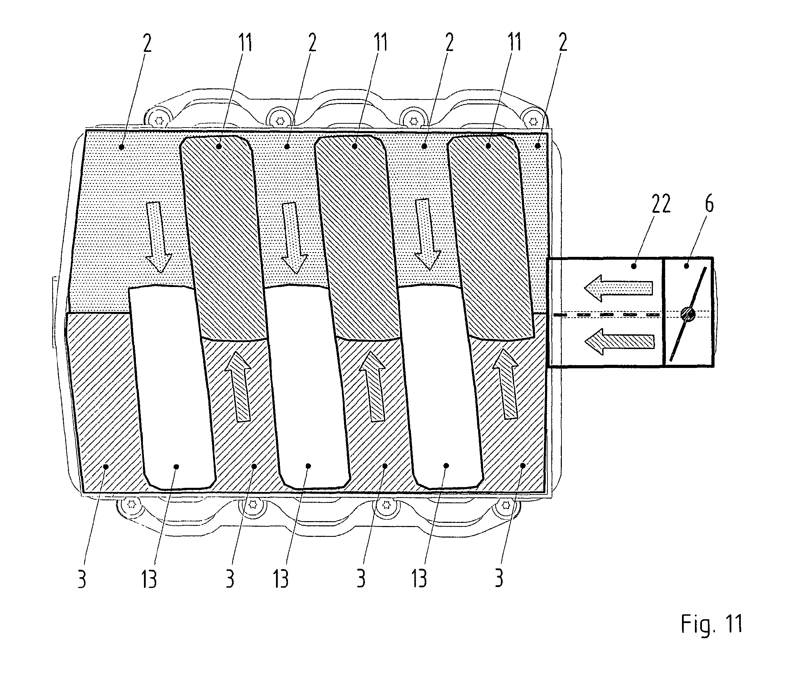

Zur Luftzuführung weist die Sauganlage 1 einen Zuführstützen 22 auf, der mit einer vertikalen Trennwand 23 versehen ist, so dass zwei getrennte Luftströme in das Gehäuse 15 eintreten und damit die Zuführleitungen 4 und 5 gebildet sind. Benachbart der Trennwand 23 ist stromaufwärts zu dieser eine nicht veranschaulichte Drosselklappe (siehe Fig. 11) mit kreisförmigem Querschnitt um eine horizontale Querachse des Zuführstutzens 22 schwenkbar, die in ihrer Sperrstellung den Durchgang des Zuführstützens 22 verschließt und zum Erreichen ihrer vollständig geöffneten Stellung entlang der halbkreisförmigen Stirnkontur 24 der Trennwand 23 beweglich ist. Der Antrieb für die Drosselklappe ist gleichfalls nicht veranschaulicht.

Die nachfolgende Beschreibung bezieht sich auf die einzelnen Teile der Sauganlage 1 und den Zusammenbau dieser Teile zur Bildung der Sauganlage 1:
Fig. 4 veranschaulicht eine Unterschale 25 der Sauganlage 1. Sie weist die Aktuatorik für die beiden Resonanzstufen auf, konkret den Antrieb 20 für die beiden Schaltklappen 9 und den Antrieb 21 für die Schaltklappe 10. Ferner weist die Unterschale 25 benachbart der Zylinderbank 14 einen Flanschanschluss 26 und benachbart der Zylinderbank 12 einen Flanschanschluss 27 auf. Durchgangslöcher zum Befestigen der Unterschale 25 am Zylinderkopf - es sind acht Löcher vorhanden - sind mit der Bezugsziffer 28 bezeichnet.

In der Unterschale 25 ist schließlich eine Teilgeometrie der Resonanzrohre 7 und 8 abgebildet, ferner ist in der Unterschale 25 eine Teilgeometrie der Schwingrohre 11 und 13 abgebildet.

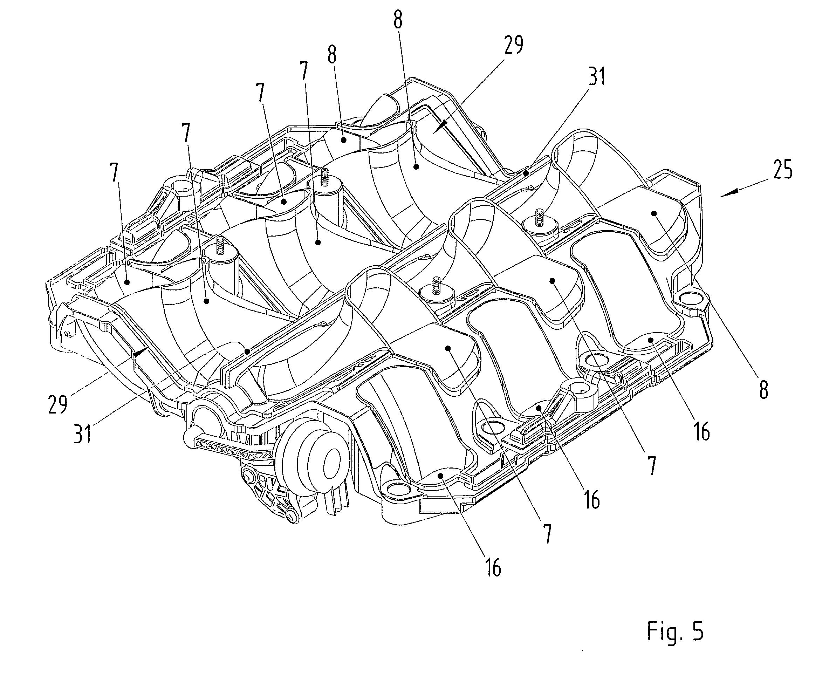

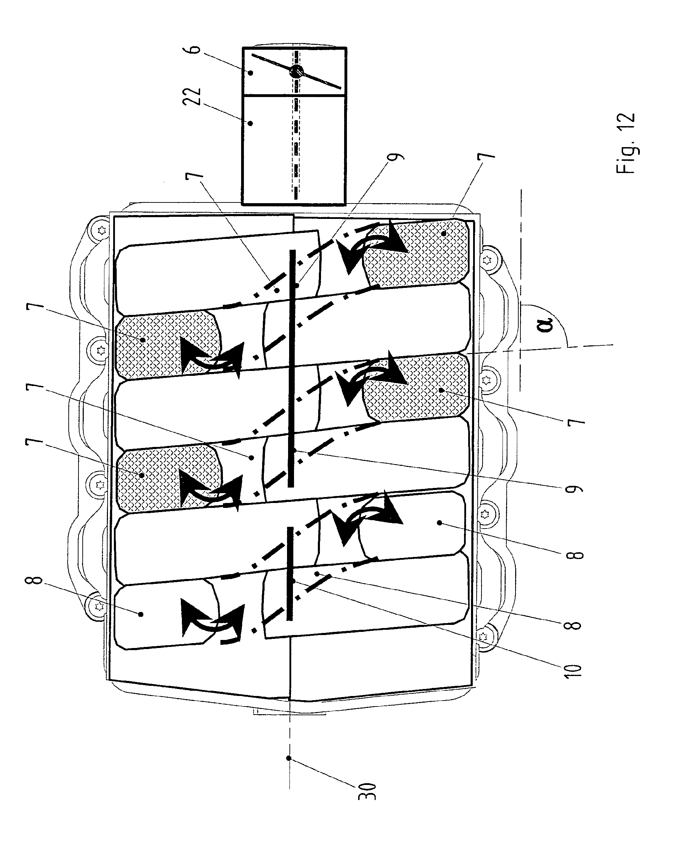

Fig. 5 zeigt ein von oben in die Unterschale 25 eingelegtes Formteil, das als Einleger 29 bezeichnet ist. Bei dem Einleger 29 handelt es sich um eine zusätzliche Schale zur fertigungstechnischen Darstellung der Resonanzrohre, somit des Resonanzrohres 8 und der beiden Resonanzrohre 7. Dieser Fig. ist zu entnehmen, dass Resonanzrohre 7 und 8 geschaffen werden, die U-förmig gekrümmt sind, mit dem Scheitel des U nach unten gerichtet. Ferner ist der Fig. 5 zu entnehmen (und insofern wird auch auf die Darstellung der Fig. 12 verwiesen), dass die Resonanzrohre 7 und 8 sowie die Schwingrohre 11 und 13 unter einem Winkel α zur Längsmittelachse 30 der Sauganlage 1, somit zur Kurbelwellenachse des V6-Motors angeordnet sind, der von einem rechten Winkel abweicht und geringer als dieser ist. In der Fig. 12 ist dieser Winkel bezüglich einer Parallelen zur Längsmittelachse 30 veranschaulicht. Dies bedeutet, dass die Zylinder der Zylinderbank 12 des Motors bezüglich der Zylinder der Zylinderbank 14 des Motors in Längsrichtung des Motors geringfügig zueinander versetzt sind. Der Bankversatz ergibt sich, weil beim Kurbeltrieb der Brennkraftmaschine jeweils zwei Pleuel in einem Hubzapfen gelagert sind.

Fig. 5 veranschaulicht schließlich eine sich über die Länge des Einlegers 29 erstreckende zentrale nutförmige Aufnahme 31, deren Funktion im nächsten Absatz beschrieben ist.

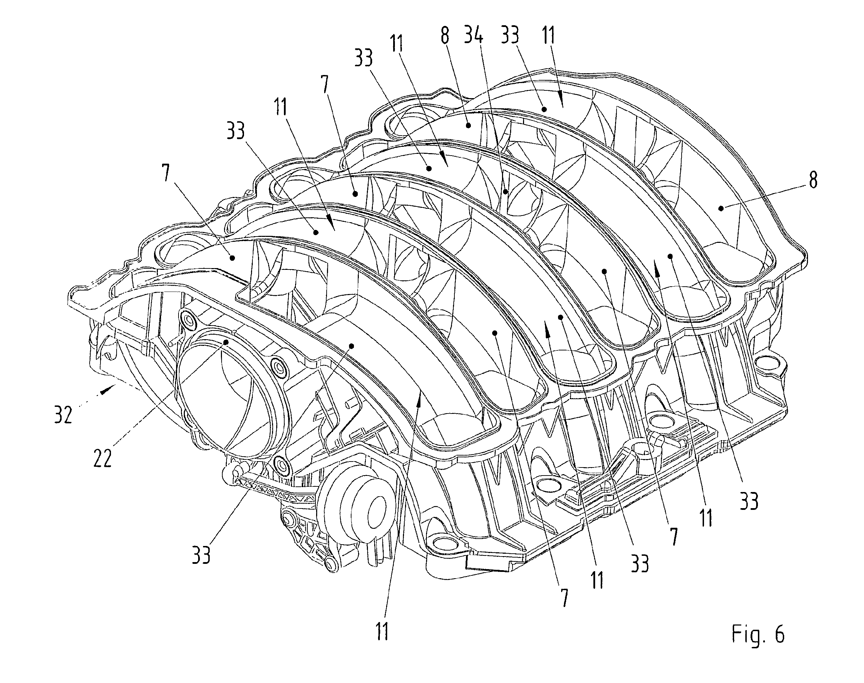

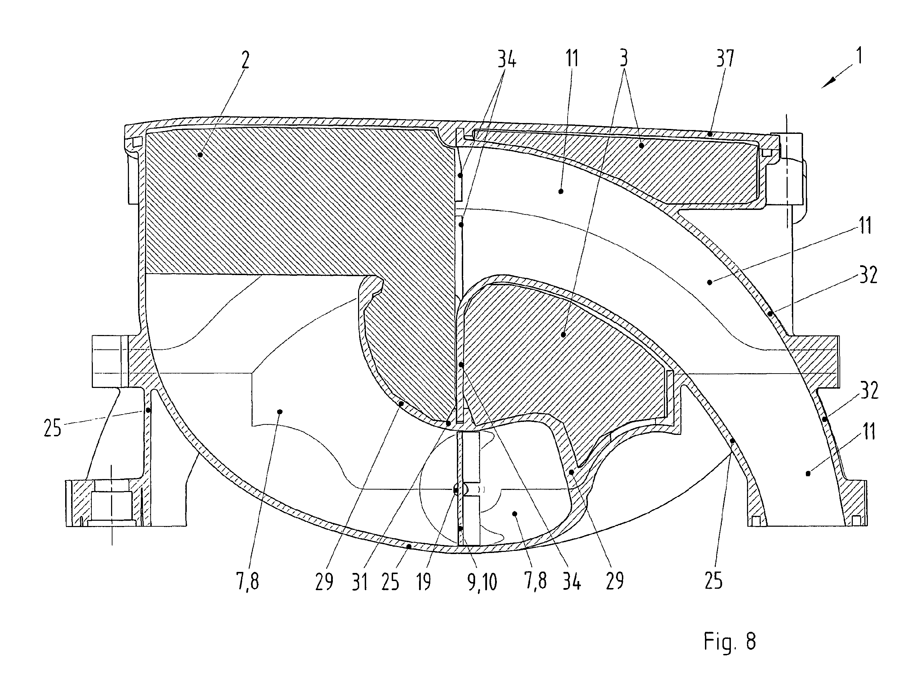

Fig. 6 veranschaulicht eine nach dem Zusammenbau von Unterschale 25 und Einleger 29 mit diesen verbundene Mittelschale 32. Diese weist den Zuführstutzen 22, die unteren Einströmtulpen 33 der Schwingrohre 11 und 13, sowie die Trennwand 24 der beiden Resonanzbehälter 2 und 3 auf, wobei die im unteren Bereich durchgehende Trennwand 34 in die Aufnahme 31 eingreift (siehe Fig. 8).

Wie der Darstellung der Fig. 8 ferner zu entnehmen ist, werden in der Mittelschale 32 Teilgeometrien der Resonanzrohre 7 und 8 sowie der Schwingrohre 11 und 13 abgebildet.

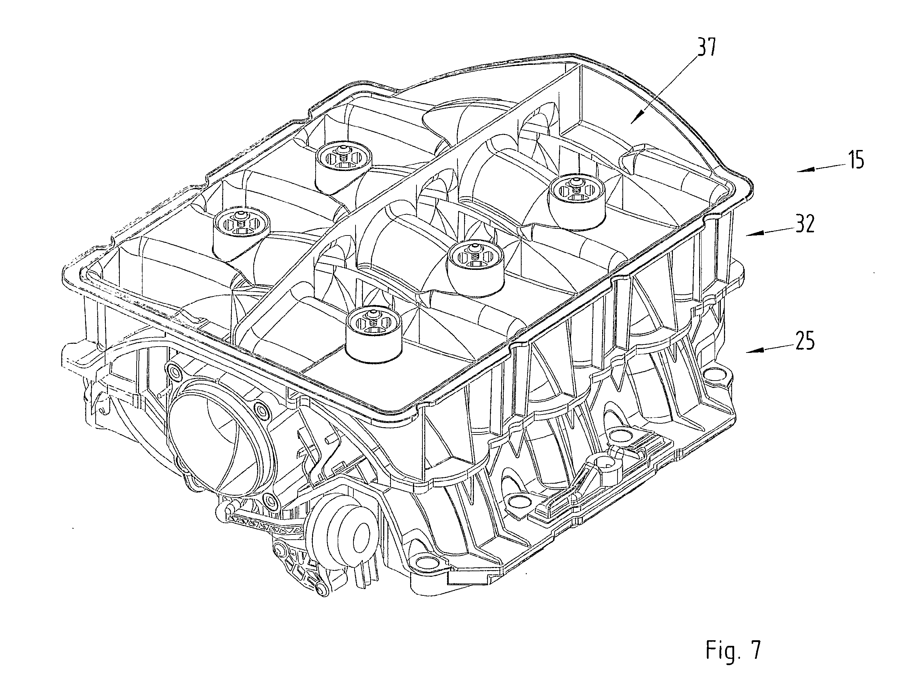

Fig. 7 zeigt die bislang beschriebene Anordnung und die auf diese aufgesetzte Oberschale 37. In der Oberschale sind die oberen Einströmtulpen für die Schwingrohre 11 und 13, die Einströmtulpen für die Resonanzrohre 7 und 8, die Teilgeometrie der Resonanzrohre 7 und 8 und der Schwingrohre 11 und 13 abgebildet (siehe Fig. 8). Nur in Fig. 2 ist gezeigt, dass die Oberschale 37 mit einem Deckel 38 abgedeckt ist. Dieser ist für die Funktion der Sauganlage 1 nicht von Bedeutung.

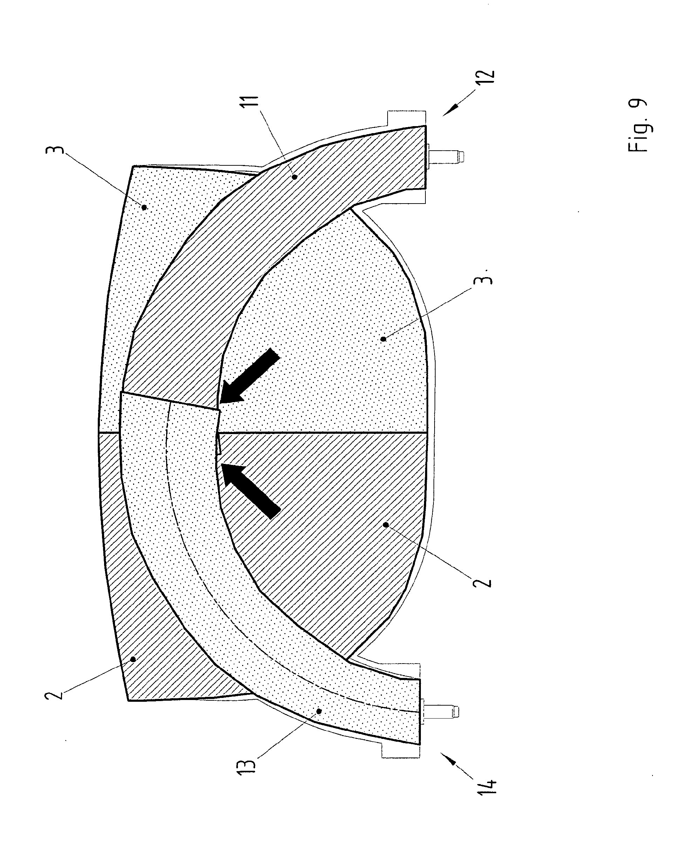

Fig. 8 zeigt einen Querschnitt durch die erfindungsgemäße Sauganlage 1 zur Verdeutlichung des prinzipiellen Aufbaus: Veranschaulicht ist, dass durch die Trennwand 34 die beiden voneinander abgetrennten Resonanzbehälter 2 und 3 gebildet sind. Sie nehmen im Wesentlichen den Raum des Gehäuses 15 ein, der nicht von den Schwingrohren 11, 13 und den Resonanzrohren 7, 8 eingenommen wird. Der Schnittführung nach Fig. 8 ist zu entnehmen, dass die Schwingrohre und die Resonanzrohre innerhalb der Resonanzbehälter 2 und 3 angeordnet sind. Dies ergibt sich unter Berücksichtigung der in Fig. 8 gezeigten Schnittführung. Dort ist gezeigt, dass das Schwingrohr 8 durch den Resonanzbehälter 2 hindurchgeführt ist. Erfolgt die Schnittführung nicht im Bereich des Schwingrohres 11, sondern des Schwingrohres 13 auf der anderen Seite der Sauganlage, ergibt sich ein Schnittbild, das dem bezüglich der Trennwand 34 gespiegelten Schnittbild gemäß Fig. 8 entspricht. Das Funktionsprinzip gemäß Fig. 9 verdeutlicht, dass die Schwingrohre 11 Luft aus dem Resonanzbehälter 2 saugen und die Schwingrohre 13 Luft aus dem Resonanzbehälter 3 saugen. Die jeweiligen Schwingrohre 11 bzw. 13 verjüngen sich zur Zylinderbank 12 bzw. 14 hin.

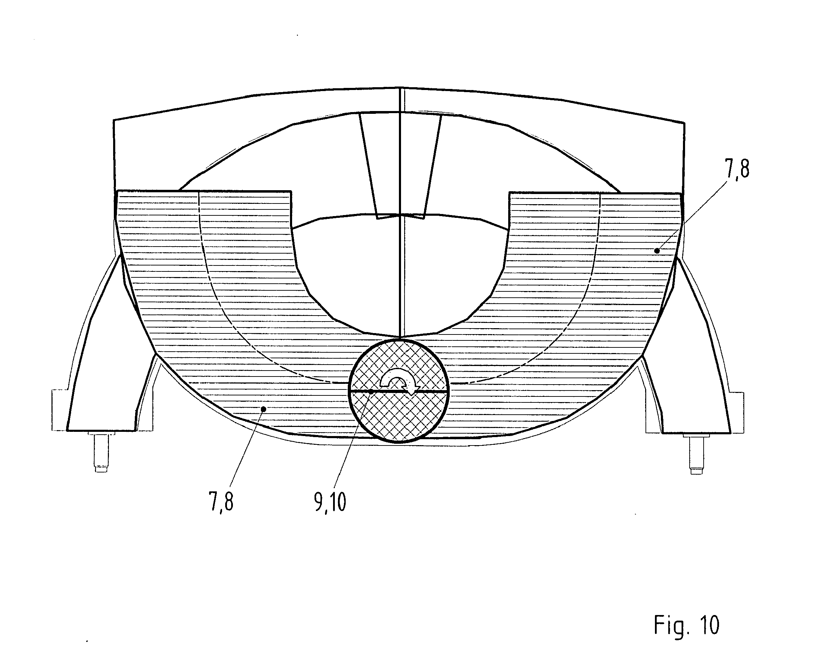

Fig. 10 zeigt eine Funktionsdarstellung zur Verdeutlichung der Funktion der Resonanzrohre 7, 8. Das jeweilige Resonanzrohr 7 bzw. 8 ist U-förmig ausgebildet, die Resonanzrohrlänge des jeweiligen Resonanzrohres ist gleich. Die Schaltklappe 10 dient dem Öffnen der Resonanzstufe 1, die Schaltklappe 10 dem Öffnen der Resonanzstufe 2. Der Querschnitt der Resonanzstufe 1, somit des Resonanzrohres 8, ist geringer als der Querschnitt der Resonanzstufe 2, somit der Gesamtquerschnitt der beiden Resonanzrohre 7.

Fig. 11 zeigt das Funktionsprinzip der Luftansaugung der Schwingrohre aus den Resonanzbehältern. Die Schwingrohre 11 saugen Luft aus dem Resonanzbehälter 3, die Schwingrohre 13 Luft aus dem Resonanzbehälter 2.

Fig. 12 veranschaulicht das Funktionsprinzip des Saugmoduls bezüglich des Resonanzrohres 7, das die Resonanzstufe 1 bildet und der beiden Resonanzrohre 8, die die Resonanzstufe 2 bilden. Der Durchmesser des Resonanzrohres 7 entspricht dem Durchmesser des jeweiligen Resonanzrohres 8, so dass der Gesamtdurchmesser der Resonanzstufe 2 größer ist als der Durchmesser der Resonanzstufe 1. Die Schaltklappe 9 dient dem Öffnen der Resonanzstufe 1, die beiden synchronbetätigbaren Schaltklappen 10 dem Öffnen der Resonanzstufe 2. Diese Schaltklappen 10 sind in der Fig. 12 als ein durchgezogener Balken dargestellt.

Die Resonanz-Sauganlage funktioniert dabei auf folgende Art und Weise: In einem unteren Drehzahlbereich ist die Resonanzstufe 1 und die Resonanzstufe 2 geschlossen. In einem mittleren Drehzahlbereich ist die Resonanzstufe 1 offen und die Resonanzstufe 2 geschlossen. In einem Zwischenbereich zwischen dem mittleren Drehzahlbereich und dem oberen Drehzahlbereich ist die Resonanzstufe 1 geschlossen und die Resonanzstufe 2 offen. In einem oberen Drehzahlbereich ist die Resonanzstufe 1 und die Resonanzstufe 2 offen.

Die erfindungsgemäße Sauganlage stellt somit bei einem V-Motor sicher, dass über den gesamten Drehzahlbereich die Eigenfrequenz der Sauganlage für die optimale Füllung der Zylinder angepasst wird.

### Bezugszeichenliste

- 1: Sauganlage
- 2: Resonanzbehälter
- 3: Resonanzbehälter
- 4: Zuführleitung
- 5: Zuführleitung
- 6: Drosselklappe
- 7: Resonanzrohr
- 8: Resonanzrohr
- 9: Schaltklappe
- 10: Schaltklappe
- 11: Schwingrohr
- 12: Zylinderbank
- 13: Schwingrohr
- 14: Zylinderbank
- 15: Gehäuse
- 16: Austrittsöffnung
- 19: Achse
- 20: Antrieb
- 21: Antrieb
- 22: Zuführstutzen
- 23: Trennwand
- 24: Stirnkontur
- 25: Unterschale
- 26: Flanschanschluss
- 27: Flanschanschluss
- 28: Loch
- 29: Einleger
- 30: Längsmittelachse
- 31: Aufnahme
- 32: Mittelschale
- 33: Einströmtulpe
- 34: Trennwand
- 37: Oberschale
- 38: Deckel

## Patentansprüche

1. Schaltbare Resonanz-Sauganlage (1) für eine Brennkraftmaschine mit einer ersten und einer zweiten Zylinderbank, wobei den Zylinderbänken (12, 14) jeweils ein Resonanzbehälter (2, 3) mit einer zu den Zylindern führenden Gruppen von Schwingrohren (11, 13) zugeordnet ist, sowie die Resonanzbehälter (2, 3) über mit Schaltklappen (9, 10) versehene Resonanzrohre (7, 8) miteinander verbunden sind, **dadurch gekennzeichnet, dass** die jeweils der einen Zylinderbank (12 bzw. 14) zugeordneten Schwingrohre (11 bzw. 13) mit dem Resonanzbehälter (2 bzw. 3), der der anderen Zylinderbank (14 bzw. 12) benachbart ist, verbunden sind.

2. Sauganlage nach Anspruch 1, **dadurch gekennzeichnet, dass** die Schwingrohre (11, 13) und/oder die Resonanzrohre (7, 8) innerhalb der Resonanzbehälter (2, 3) angeordnet sind.

3. Sauganlage nach Anspruch 1 oder 2, **dadurch gekennzeichnet, dass** die der jeweiligen Zylinderbank (12 bzw. 14) zugeordneten Schwingrohre (11 bzw. 13) denjenigen Resonanzbehälter (3 bzw. 2) durchsetzen, der dieser Zylinderbank (12 bzw. 14) zugeordnet ist.

4. Sauganlage nach einem der Ansprüche 1 bis 3, **dadurch gekennzeichnet, dass** die Resonanzrohre (7, 8) U-förmig gekrümmt ausgebildet sind.

5. Sauganlage nach einem der Ansprüche 1 bis 4, **dadurch gekennzeichnet, dass** die Schwingrohre (11, 13) der Sauganlage (1), ausgehend von den Zylinderbänken (12, 14), in Richtung der Oberseite der Sauganlage (1) gekrümmt sind und/oder die Resonanzrohre (7, 8), ausgehend von einem Bereich der Sauganlage (1) benachbart der Zylinderbänke (12, 14), in Richtung der Unterseite der Sauganlage (1) gekrümmt sind.

6. Sauganlage nach einem der Ansprüche 1 bis 5, **dadurch gekennzeichnet, dass** die Schwingrohre (11, 13) eine Gruppe bilden, die in einer Richtung gekrümmt ist, und die Resonanzrohre (7, 8) eine Gruppe bilden, die bezüglich der Gruppe von Schwingrohren (11, 13) gegensinnig gekrümmt ist, insbesondere die beiden Gruppen ineinander geschachtelt angeordnet sind.

7. Sauganlage nach einem der Ansprüche 1 bis 6, **dadurch gekennzeichnet, dass** die Schwingrohre (11, 13) und die Resonanzrohre (7, 8) schräg zu einer Ebene verlaufen, die quer zur Kurbelwellenachse der Brennkraftmaschine angeordnet ist.

8. Sauganlage nach einem der Ansprüche 1 bis 7, **dadurch gekennzeichnet, dass** die Schaltklappen (9, 10) in den end- oder den zentralen Bereichen der Resonanzrohre (7, 8) angeordnet sind.

9. Sauganlage nach einem der Ansprüche 1 bis 8, **dadurch gekennzeichnet, dass** durch die Resonanzrohre (7, 8) eine erste und eine zweite Resonanzstufe gebildet ist, die unabhängig voneinander schaltbar sind, wobei ein erstes schaltbares Resonanzrohr (8) die erste Resonanzstufe und zwei zweite schaltbare Resonanzrohre (7, 7) die zweite Resonanzstufe bilden.

10. Sauganlage nach einem der Ansprüche 1 bis 9, **dadurch gekennzeichnet, dass** die Luftzuführung der Sauganlage (1) zwei Zuführleitungen (4, 5) aufweist, die unmittelbar mit den Resonanzbehältern (2, 3) verbunden sind.

11. Sauganlage nach Anspruch 10, **dadurch gekennzeichnet, dass** die Luftzuführung mindestens eine Drosselklappe (6) aufweist, wobei die beiden Luftzuführleitungen (4, 5) zwischen der Drosselklappe (6) und den beiden Resonanzbehältern (2, 3) angeordnet sind.

12. Sauganlage nach Anspruch 10 oder 11, **dadurch gekennzeichnet, dass** die Länge der jeweiligen Zuführleitung (4, 5) mindestens der halben Länge eines Resonanzrohres (7, 8) entspricht.

13. Sauganlage nach einem der Ansprüche 1 bis 12, **dadurch gekennzeichnet, dass** die Sauganlage (1) eine Unterschale (25), einen in diese einlegbaren Einleger (29), eine Mittelschale (32) und eine Oberschale (37) aufweist.

14. Sauganlage nach Anspruch 13, **dadurch gekennzeichnet, dass** in der Unterschale (25) die Schaltklappen (9, 10) gelagert sind und die Unterschale (25) den Flanschanschluss zum Zylinderkopf aufweist sowie Teilgeometrien der Resonanzrohre (7, 8) und der Schwingrohre (11, 13) abbildet.

15. Sauganlage nach Anspruch 13 oder 14, **dadurch gekennzeichnet, dass** der Einleger (29) eine Teilgeometrie der Resonanzrohre (7, 8) abbildet.

16. Sauganlage nach einem der Ansprüche 13 bis 15, **dadurch gekennzeichnet, dass** die Mittelschale (32) einen Flansch für den Anschluss der Drosselklappe (6), untere Einströmtulpen (33) für die Schwingrohre (11, 13) und eine Trennwand (34) zwischen den beiden Resonanzbehälter (2, 3) aufweist, sowie Teilgeometrien der Resonanzrohre (7, 8) und der Schwingrohre (11, 13) abbildet.

17. Sauganlage nach einem der Ansprüche 13 bis 16, **dadurch gekennzeichnet, dass** die Oberschale (37) Einströmtulpen für die Schwingrohre (11, 13) und die Resonanzrohre (7, 8) aufweist und Teilgeometrien der Resonanzrohre (7, 8) und der Schwingrohre (11, 13) abbildet.
